(19) Europäisches Patentamt
European Patent Office
Office européen des brevets

(11) **EP 4 742 103 A1**

(12) **EUROPEAN PATENT APPLICATION**

(43) Date of publication:
**13.05.2026 Bulletin 2026/20**

(21) Application number: **24306886.3**

(22) Date of filing: **08.11.2024**

(51) International Patent Classification (IPC):
**G06N 3/063** (2023.01)    **G06N 3/10** (2006.01)
**G06N 3/045** (2023.01)

(52) Cooperative Patent Classification (CPC):
**G06N 3/105; G06N 3/063;** G06N 3/045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **FILOCHE, Thierry**
  **35410 Chateaugiron (FR)**
• **QUINQUIS, Cyril**
  **35520 Melesse (FR)**
• **ONNO, Stephane**
  **35760 Saint Gregoire (FR)**

(74) Representative: **Vossius & Partner
Patentanwälte Rechtsanwälte mbB
Siebertstraße 3
81675 München (DE)**

(54) **METHOD TO INDEX AN INTERMEDIATE DATA TENSOR**

(57)    In an example method for use in a split inferencing architecture, information is obtained at a first endpoint describing at least a first sub-model of a split-inferencing machine learning model. In communication with a second endpoint, a tensor indexing algorithm is selected. The first sub-model is executed to obtain at least one tensor. The tensor is sent to the second endpoint, each tensor being identified by a respective reference determined according to the selected tensor indexing algorithm.

**FIG. 7**

**Description**

**BACKGROUND**

The present disclosure relates to machine learning (ML) models. New uses for machine learning models are constantly being developed. As the usefulness of such models increases, the computational complexity of those models continues to grow. It may be difficult to implement a complete machine learning model entirely on one computing device, particularly where the computing device is consumer level user equipment. The present disclosure thus relates to techniques in which an ML model is implemented partly on one endpoint (such as user equipment, UE) and partly on another endpoint (which may be a network entity), referred to as split inferencing.

**SUMMARY**

Briefly stated, in one embodiment, a method comprises: at a first endpoint, obtaining information describing at least a first sub-model of a split-inferencing machine learning model; in communication with a second endpoint, selecting a tensor indexing algorithm; executing the first sub-model to obtain at least one tensor; and sending the tensor to the second endpoint, wherein each tensor is identified by a respective reference determined according to the selected tensor indexing algorithm. An apparatus according to some embodiments comprises one or more processors configured to perform such a method.

A method according to some embodiments comprises: at a second endpoint, obtaining information describing at least a second sub-model of a split-inferencing machine learning model; in communication with a first endpoint, selecting a tensor indexing algorithm; receiving at least one tensor from the first endpoint, wherein each tensor is identified by a respective reference determined according to the selected tensor indexing algorithm; and executing the second sub-model on the at least one tensor. An apparatus according to some embodiments comprises one or more processors configured to perform such a method.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 illustrates an architecture for a split inference between the UE (user equipment) and network, with the media data source in the UE.

FIG. 2 illustrates an architecture for a split inference between the UE (user equipment) and network, with the media data source in the network.

FIGs. 3A-3C illustrate a split inferencing model in which only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. a network). FIG. 3C illustrates the topology of the entire model (with names removed for clarity of illustration).

FIGs. 4A-4D illustrate an example of a split inferencing model with two connections. FIG. 4A illustrates Part I. FIG. 4B and 4C together illustrate Part II. FIG. 4D illustrates the complete model topology (with names removed for clarity of illustration).

FIG. 5 illustrates a split inference architecture that may be used to implement an indexing method with negation and transmission of intermediate data with encoded tensor name.

FIG. 6 is a call flow diagram illustrating a negotiation method performed in some embodiments.

FIG. 7 is a call flow diagram illustrating an inference loop method performed in some embodiments.

FIG. 8 provides an overview of the topology of an ML model used in some embodiments. For clarity of illustration, most nodes are not labelled.

FIG. 9 illustrates Submodel I based on the model of FIG. 8 split at the node with index 5.

FIG. 10 illustrates Submodel II based on the model of FIG. 8 split at the node with index 5.

FIG. 11 is a call flow diagram illustrating implementation of split inferencing in a 3GPP framework.

FIG. 12 is a functional block diagram of an apparatus on which some embodiments may be implemented.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

*Overview of Split Inferencing of a Trained Model*

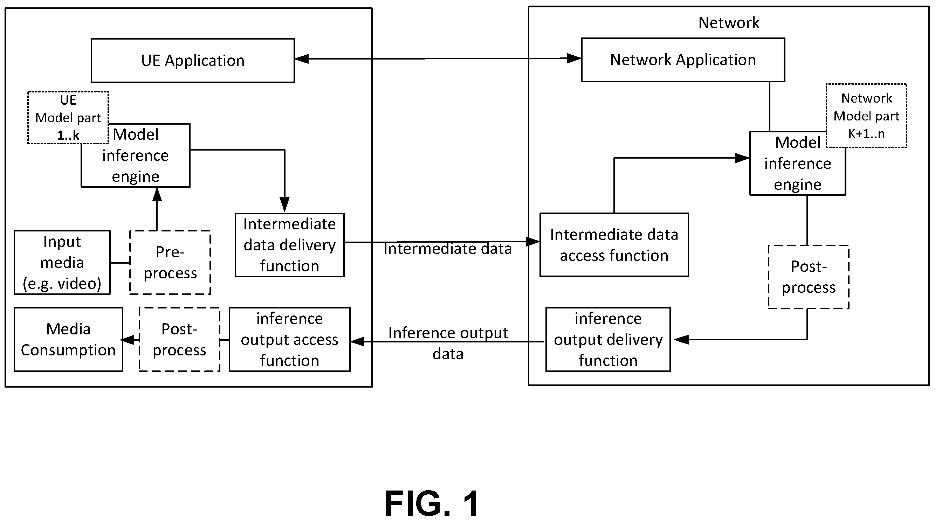

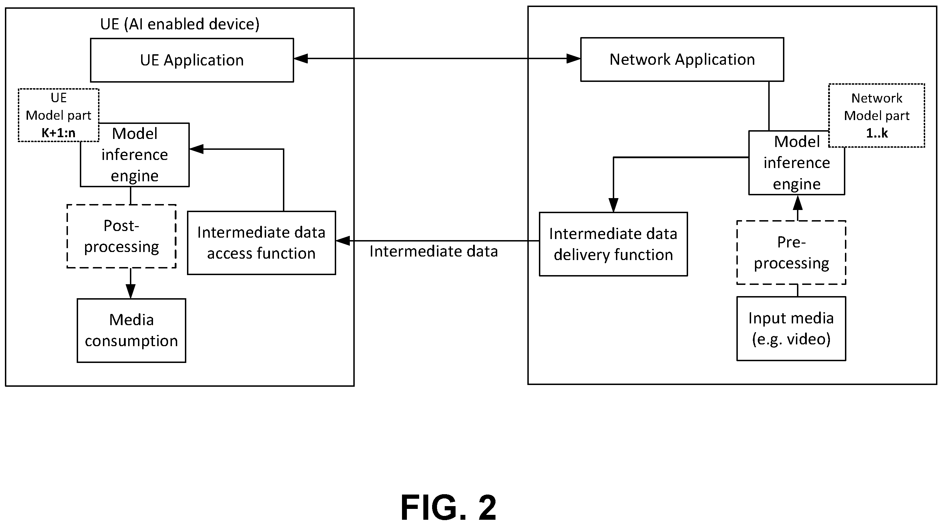

FIG. 1 provides an overview of an architecture (3GPP SA4 AI4media) for split inferences of a model composed of n layers or nodes (1..n) between the network and a user equipment (UE), where a first inference implemented on a first endpoint processes first part of the model, i.e. layers 1..k, and the second inference implemented on a second endpoint processes the second part of the model, i.e. layers k+1..n. The architecture shows the delivery and access functions of intermediate data between the UE and the network when the media data source originates from the UE. The first part of the inference is then performed in the UE and the second part in the network. The resulting output data is finally sent back to the UE.
In another configuration, illustrated in FIG. 2, the media data source comes from the network, then the first part of the AI model is performed on the network side and the second part on the UE. Example embodiments herein may be implemented using either configuration.
A pre-processing is used to adapt the input media data to the input inference. Conversely, a post-processing is used to adapt the output results data of the inference to the media consumption.
In the present disclosure, the terms "layers" or "nodes" may be used interchangeably. Among those skilled in the art, the term "layers" is used more often in frameworks like Tensorflow, while "nodes" tends to be used with reference to the ONNX framework. The term "branch" refers to the entity that links two nodes or two layers e.g. the output of a node/layer A that is the input of node/layer B.

*Branch splitting*

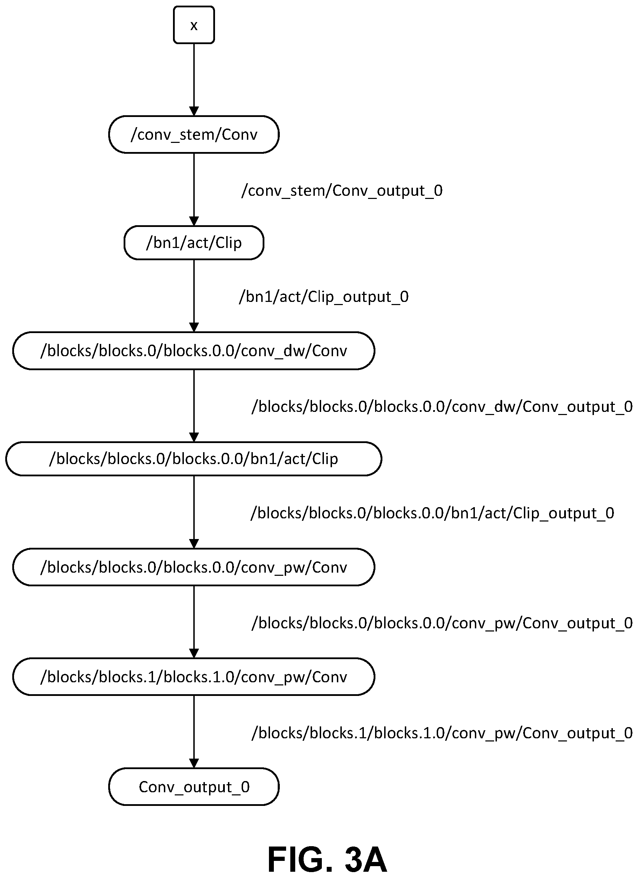

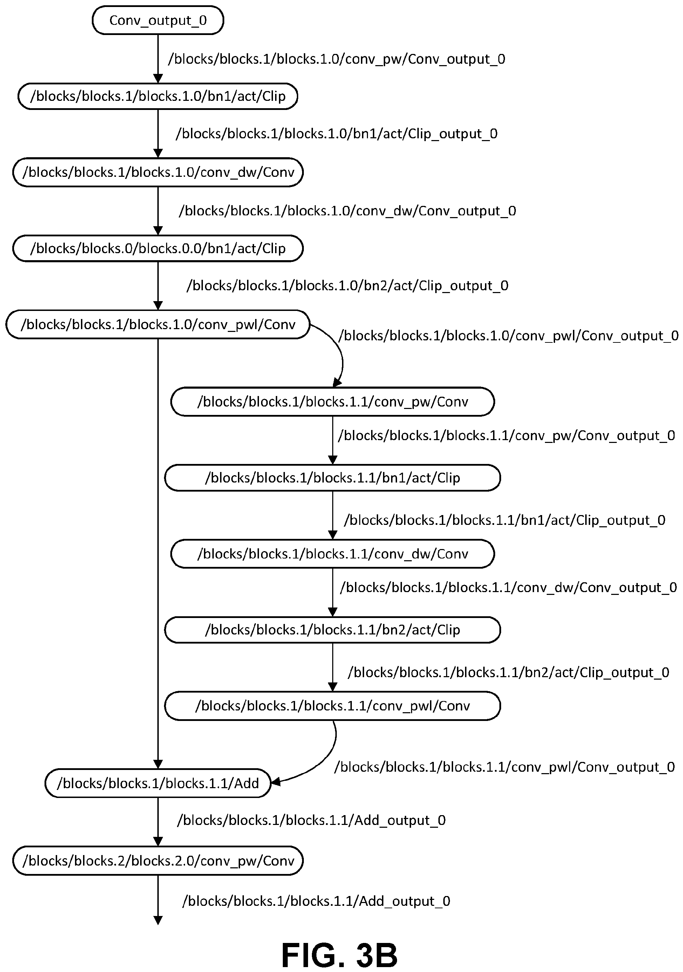

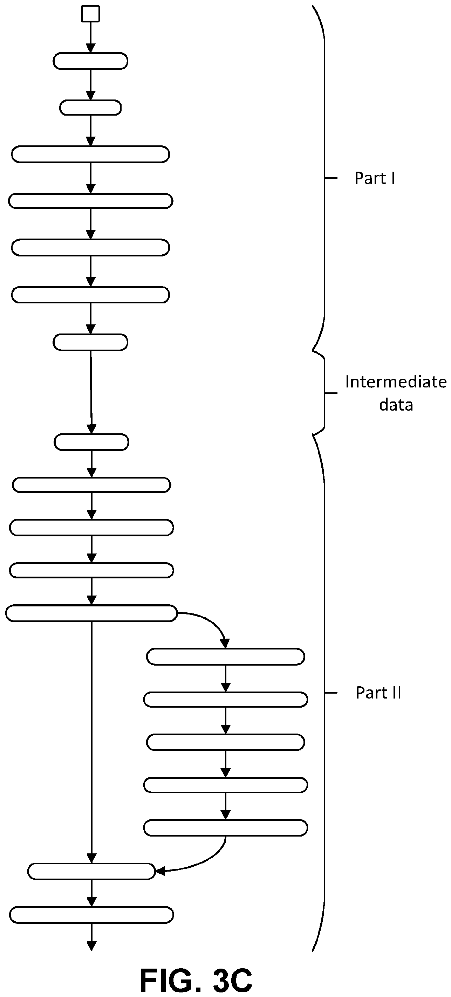

Artificial intelligence (AI) and/or machine learning (ML) model architectures have various different structures and different levels of complexity. A neural network can include thousand or millions of nodes. Each node is connected with at least another node. In case of multiple connections, the split operation applies on multiple branches. In case of a simple connection, the split operation applied on a single branch.
**Single-branch split.** FIGs. 3A-3C show a representation of the efficientnet_lite0_Opset16.onnx model which was split at the node numbered "node 10" in the numbering scheme of that model, where only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. Network). FIG. 3C illustrates the topology of the entire model (with names removed for clarity of illustration). The name of the "node 10" output is "/blocks/blocks.1/blocks.1.0/conv_pw/Conv_output_0" with short name "Conv_output_0". This branch name is used to identify the intermediate data which are sent from EndPoint1 (e.g. UE) to EndPoint2 (e.g. Network).
The intermediate data delivery function associates intermediate data with node I/O naming, e.g. "/blocks/-blocks.1/blocks.1.0/conv_pw/Conv_output 0".
The intermediate data access function parses the intermediate data packet, retrieves the node I/O naming, e.g. branch "/blocks/blocks.1/blocks.1.0/conv_pw/Conv_output_0" and can route the intermediate data to the ad-hoc layer in the model inference engine.
**Multibranch split.** For some models, or some parts of a model, a node is connected to several nodes for its input, and/or several nodes for its output. A split made at a such node is called a multibranch split. The result is several tensors that encapsulate intermediate data.

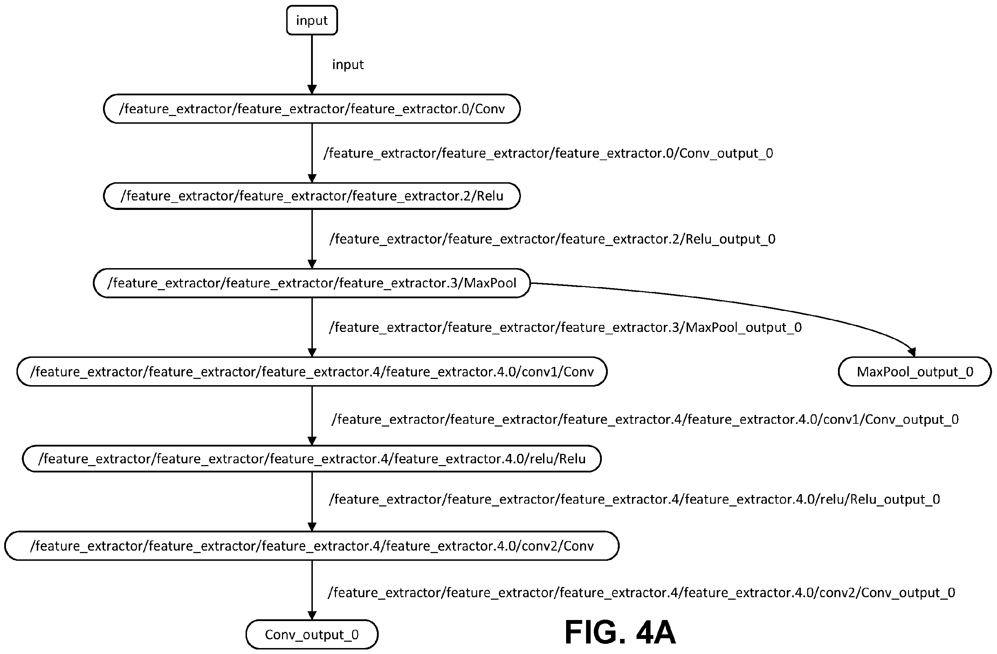

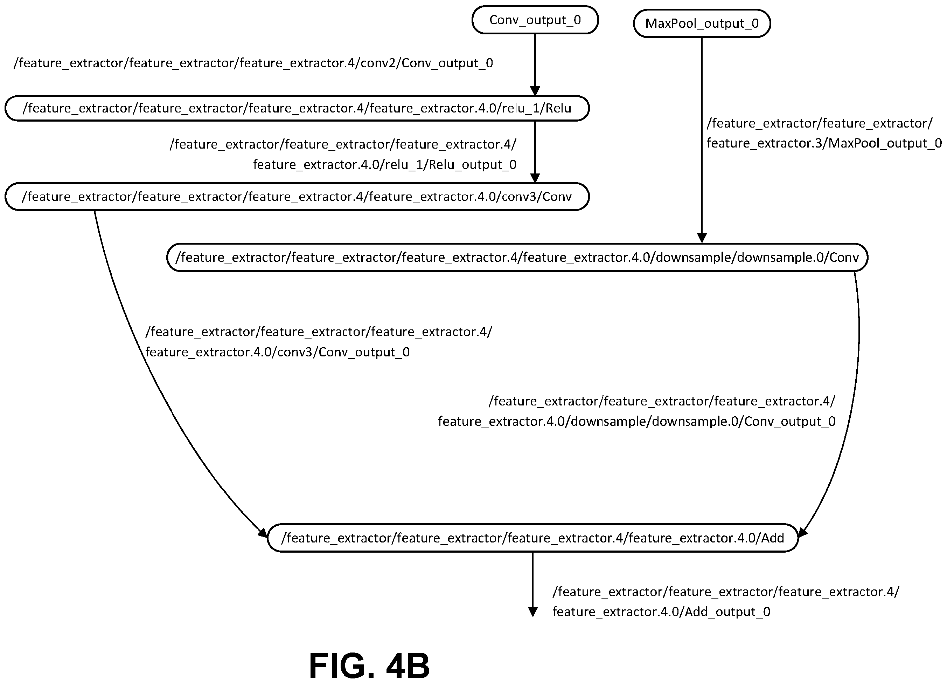

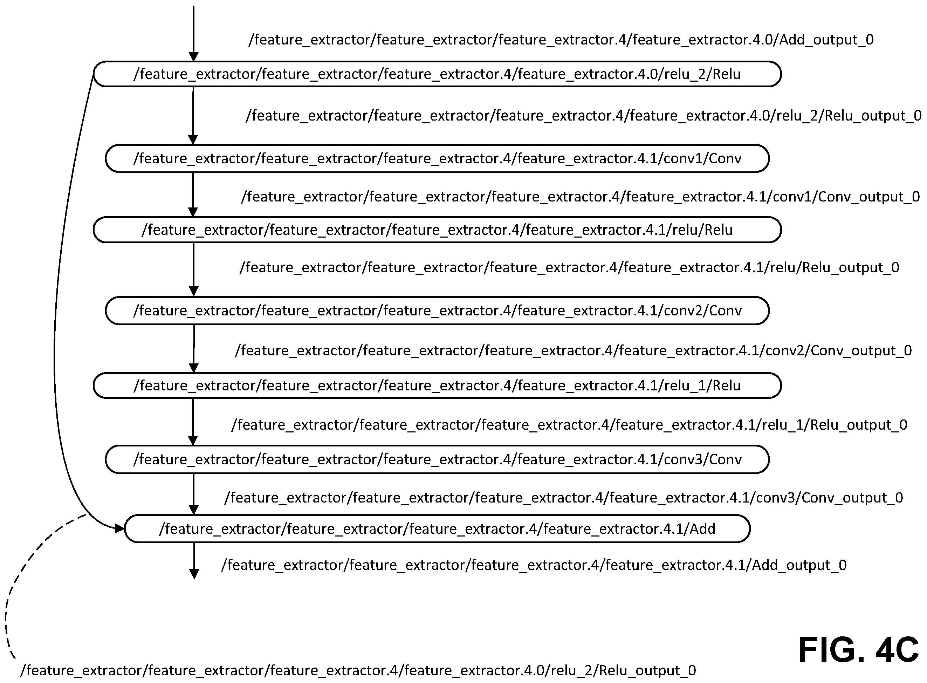

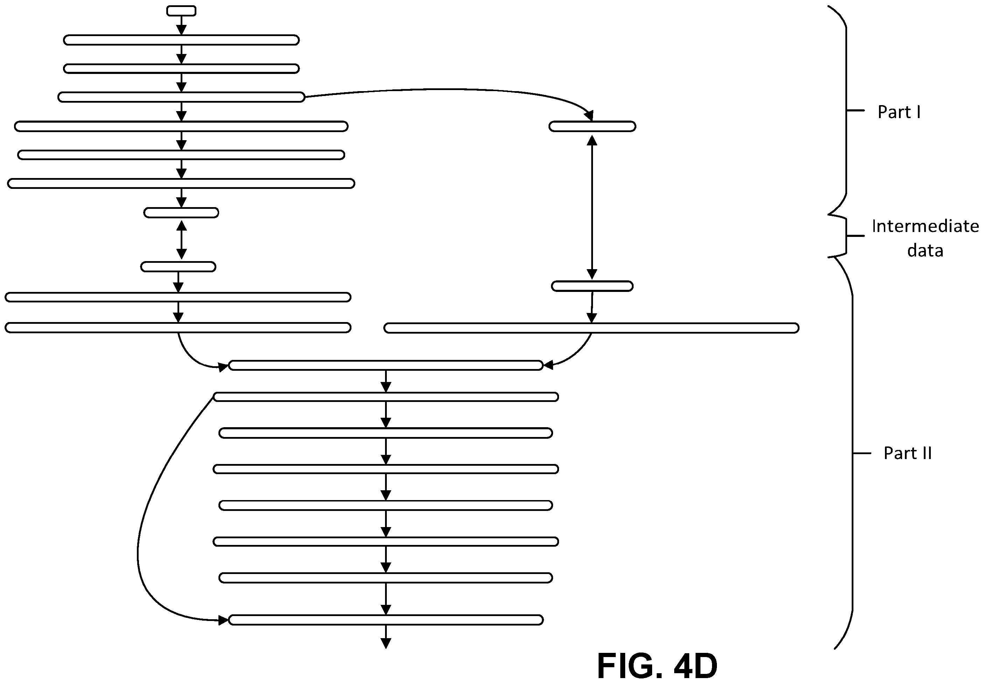

FIGs. 4A-4D illustrate an example of the resnet model split at node 6 into Part I and Part II. FIG. 4A illustrates Part I. FIG. 4B and 4C together illustrate Part II. FIG. 4D illustrates the complete model topology (with names removed for clarity of illustration). The split is made of two branches:

- one branch from "node 6"

    ("/feature_extractor/feature_extractor/feature_extractor.4/feature_extractor.4.0/conv2 /Conv") to node 7 with branch name
    "/feature_extractor/feature_extractor/feature_extractor.4/feature_extractor.4.0/conv2/ Conv_output_0″″",

- and one branch from "node 3"

    ("/feature_extractor/feature_extractor/feature_extractor.3/MaxPool") to "node 9" with branch name
    "/feature_extractor/feature_extractor/feature_extractor.3/MaxPool_output_0".

Tensors and intermediate data are conventionally identified with the branch naming, ["/feature extractor/feature extractor/feature_extractor.4/feature_extractor.4.0/conv2/Conv_ output_0" , "/feature_extractor/feature_extractor/feature_extractor.3/MaxPool_output_0"].

The intermediate data delivery function combines intermediate data with branch naming.

The intermediate data access function parses the intermediate data packet, retrieves the branch naming and can route the intermediate data to the EndPoint2.

### *Overview of the ONNX format*

ONNX is an open format built to represent machine learning models. ONNX defines a common set of operators - the building blocks of machine learning and deep learning models - and a common file format to enable AI developers to use models with a variety of frameworks, tools, runtimes, and compilers.

ONNX may be used to describe a computational graph. The model itself is organized in graph, in a tree-like way (e.g. an ONNX model may be load as onnx_model = onnx.load(onnx model_name)).

Inputs of a model are available as a list of string (e.g. onnx_model.graph.input).

Outputs of a model are available as a list of string (e.g. onnx_model.graph.output).

Each machine learning operation is represented by a "node".

All nodes are available through a list (e.g. onnx_model.graph.node)

Each node has following properties:

- node.name: a string that identifies this node
- node.input: a list of string that represent tensor name expected by the node
- node.output: a list of string that represent tensor name generated by the node
- node.op_type: a string that identifies the operation of the node

Running an inference with an ONNX model conventionally involves passing a dictionary containing the association tensor name / tensor value, such as the following example, in which the tensor names are the names of the input tensors of the model.

```
{ «tensor_name_1»: tensor_value_1,
«tensor_name_2»: tensor_value_2,
«tensor_name_n»: tensor_value_n
}
```

### *Overview of issues addressed in some embodiments*

An application running on a UE may make use of an AI/ML model M to infer pictures, videos, texts, or audio sequences. For some reasons, like local constraints on memory and/or energy limitations, the inference process is distributed between an EndPoint1 and an EndPoint2 respectively a UE itself and the Network. Thus, on EndPoint1 the application downloads or otherwise obtains a sub-model M1 which is a sub-part of M, while EndPoint2 (Network) downloads or otherwise obtains the corresponding sub-model M2. M1 and M2 have at least one input, and at least one output.

M1 and M2 are two sub-models that constitute model M. By working together, they replicate the M inference process in the sense that they provide the same functionality with the same results in terms of accuracy or score.

The inference is distributed between M1 and M2. Intermediate data of the M1 inference results are then communicated to the second endpoint.

A straightforward solution is to communicate these intermediate data by communicating both "tensor name" and "tensor value". However, this straightforward solution regarding the tensor names may have the following issues:

- Tensor names have often a long size due to complex naming conventions used at the conception of the model, or during the automatic conversion of the model from the original framework (e.g. tensorflow, pytorch, ...) to ONNX framework. (e.g. StatefulPartitionedCall/StatefulPartitionedCall/dense/StatefulPartitionedCall/MatMul:0 , /feature_extractor/feature_extractor/feature_extractor.3/MaxPool) that may unnecessarily slow down the transmission of intermediate data.
- Tensor names may contain special characters like "f", "\" that may generate some troubles for interoperability between various operating systems.
- Information transmitted in the clear can give important information to hacker that may discover tensor names, model used, and may exploit this information to create a computer breach.

### Overview of example embodiments

In view of these issues, example embodiments endeavour to provide a way to generate a more concise and unique representation of the tensor name. Example embodiments further provide techniques for communicating the method used to generate this unique representation.

Some example embodiments make use of a negotiation phase and an inference loop phase. In the negotiation phase, some or all of the following actions may be taken:

- A first endpoint and a second endpoint negotiate an indexing algorithm supported by both endpoints. This negotiation step may also occur during inference loop step.
- At the end of this negotiation step each endpoint has knowledge of the agreed indexing algorithm table, the agreed indexing algorithm, and has built or collected the tensors indexing table (the table of association index - tensor names).

In the inference loop phase, some or all of the following actions may be taken:

- A first endpoint infers a first part of the model resulting in intermediate data.
- A first endpoint selects an agreed indexing algorithm.
- A first endpoint encodes the tensor name by generating a key index based on the agreed indexing algorithm.
- A first endpoint sends the intermediate data to the second endpoint with the encoded tensor name.
- A second endpoint receives the intermediate data with the encoded tensor name.
- According to the agreed indexing algorithm received at the negotiation step, a second endpoint decodes the received encoded tensor names and retrieve the original tensor names.
- A second endpoint infers the second part of the model.

The list of indexing algorithms table exchanged at the negotiation phase may be provided using different means. A predefined table of indexing algorithms may also be used.

Example embodiments operate to hide and shorten intermediate data tensor names. Example embodiments index intermediate data tensor names to enable the exchange of a simple index instead of full tensor names. Such embodiments offer some gain on the data length of data exchanged and some confidentiality on the data exchanged as the tensor name is not explicitly communicated between the two endpoints. Some embodiments include a negotiation phase to indicate the use of the method between the two endpoints and exchange additional information used to run the selected algorithm.

### Bijection between keys and tensor names

Example embodiments generate a key in an unequivocal way that establishes a bijection between the tensor name and the generated key. With ONNX models for example, this is possible thanks to the fact that ONNX graphs are DAG (Direct Acyclic Graph). Consequently, all nodes are sequentially listed in a unique way. In addition, for each node, all outputs of the nodes are also listed in a unique way. This makes it possible to browse all node's output in a unique way and to generate a unique node output reference.

### Key indexation

Example embodiments may make use of any of a variety of indexations. In some embodiments the indexation may be a global unique reference such, as:

- an integer from 0 to n, indicating the rank of the tensor in the model; or
- a string using a specific format including an integer from 0 to n: e.g. "output_34", "tensor_37"

It should be noted that the term "rank" used herein refers to the ordinal position of a tensor (e.g. first, second, third etc.) among the tensors used in a model, rather than the tensor rank in the sense of tensor rank decomposition as used in linear algebra. In some embodiments the indexation may be a combined/relative reference, combining a node index, and an output node index, such as:

- an array of integers: [node index, node output index of this node]
  e.g. [17,0], [17,1], where [17, 0] means the first output of node 17, [17, 1] means the second output of node 17;
- a couple of integers: (node index, node output index of this node)
  e.g. (17,0), (17,1)
- a string composed of two integers: node index.node_output_index_of_this node
  e.g. "0.0", "0.1"; or
- a string using a specific format including two integers:
  e.g. "output_0.0", "tensor_0.1"

*Indexing algorithms*

**Encoding phase: pseudocode to generate a global reference.** A technique as shown in the following pseudocode may be used by a first endpoint to encode a tensor name by generating a global unique reference (e.g. an integer from 0 to n, where(n+1) is the number of node outputs in the model). This pseudocode may run either on the full model, or on submodel I. For sake of simplicity, full model or submodel I is called "M1" on the pseudo code below.

- Input: model M1 with nodes $n_i$ having output $o_j$
- Initialize 'output_index' to 0
- Create dictionary 'D' that will store association "output name" to "output-index"
- For all nodes $n_i$ of the model M1:

  o For all outputs $o_j$ of node $n_i$

    ▪ set D[$o_j$ output name] to output_index
    ▪ increment output index by one

- D contains the key index/global reference of each tensor_name
- For each tensor (tensor_name, tensor_value) of intermediate tensors, send (D[tensor_name], tensor_value) to the second endpoint

In a variant embodiment, tensors may be sorted by alphabetical order as shown in the following pseudocode.

- Input: model M1 with nodes $n_i$ having output $o_j$
- Create dictionary 'D' that will store association "output name" to "output-index"
- Initialize tensor_list to []
- For all nodes $n_i$ of the model M1:

  o For all outputs $o_j$ of node $n_i$

    ▪ Add $o_j$ output name to tensor_list

- Sort tensor_list by alphabetical order
- Initialize 'output_index' to 0
- For all tensor_name of tensor list:

  o set D[tensor_name] to output index
  o increment output index by one

- D contains the key index/global reference of each tensor_name
- For each tensor (tensor_name, tensor_value) of intermediate tensors, send (D[tensor_name], tensor_value) to the second endpoint

**Decoding phase: pseudocode to retrieve tensor name from a global reference.** A technique as shown in the following pseudocode may be used by a second endpoint to decode a global unique reference to retrieve the original tensor name. This pseudocode may run either on the full model, or on submodel I. For sake of simplicity, full model or submodel I is called "M1" on the pseudo code below.

- Input: model M1 with nodes $n_i$ having output $o_j$
- Initialize 'output_index' to 0
- Create dictionary 'D_reverse' that will store association "output_index" to "output name"
- For all nodes $n_i$ of the model M1:

    o For all outputs $o_j$ of node $n_i$

    - set D_reverse[output_index] to $o_j$ output name
    - increment output index by one

- D_reverse contains the original tensor_name for each global reference
- For each tensor (global_reference, tensor_value) of intermediate tensors, retrieve the tensor_name by doing tensor_name= D_reverse[global_reference]

In a variant embodiment, tensors may be sorted by alphabetical order as shown in the following pseudocode.

- Input: model M1 with nodes $n_i$ having output $o_j$
- Initialize tensor_list to []
- Create dictionary 'D_reverse' that will store association "output-index" to "output name"
- For all nodes $n_i$ of the model M1:

    o For all outputs $o_j$ of node $n_i$

    - Add $o_j$ output name to tensor_list

- Sort tensor_list by alphabetical order
- Initialize 'output_index' to 0
- For all tensor_name of tensor list:

    o set D_reverse[output_index] to tensor_name
    o increment output index by one

- D_reverse contains the original tensor_name for each global reference

**Encoding phase: pseudocode to generate a reference related to the node rank.** A technique as shown in the following pseudocode may be used by a first endpoint to encode a tensor name by generating a reference related to a node rank (e.g. a couple of integers (node rank, node output rank of this node)). This pseudocode may run either on the full model, or on submodel I. For sake of simplicity, full model or submodel I is called "M1" on the pseudo code below.

- Input: model M1 with nodes $n_i$ having output $o_j$
- Initialize 'node_rank' to 0
- Create dictionary 'D' that will store association output name to (node_rank, output_rank)
- For all nodes $n_i$ of the model M1:

    o Initialize 'output_rank' to 0
    o For all outputs $o_j$ of node $n_i$

    - set D[$o_j$ output name] to (node_rank, output_rank)
    - increment output_rank' by one

    o increment node_rank by one

- D contains the key index/related reference of each tensor_name
- For each tensor (tensor_name, tensor_value) of intermediate tensors, send (D[tensor_name], tensor_value) to the second endpoint

**Decoding phase: pseudocode to retrieve tensor name from couple (node rank, node output rank).** A technique as shown in the following pseudocode may be used by a second endpoint to decode a related reference to retrieve the original tensor name. This pseudocode may run either on the full model, or on submodel I. For sake of simplicity, full model or submodel I is called "M1" on the pseudo code below.

- Input: model M1 with nodes $n_i$ having output $o_j$
- Initialize 'node_rank' to 0
- Create dictionary 'D_ reverse that will store association (node_rank, output_rank) to output name
- For all nodes $n_i$ of the model M1:

    o Initialize 'output_rank' to 0
    o For all outputs $o_j$ of node $n_i$

        ▪ set D_reverse [(node_rank, output_rank)] to $o_j$ output name
        ▪ increment output_rank by one

    o increment node_rank by one

- D_reverse contains the original tensor_name for each related reference
- For each tensor (related_reference, tensor_value) of intermediate tensors, retrieve the tensor_name by doing tensor_name= D_reverse[related_reference]

*Architecture*

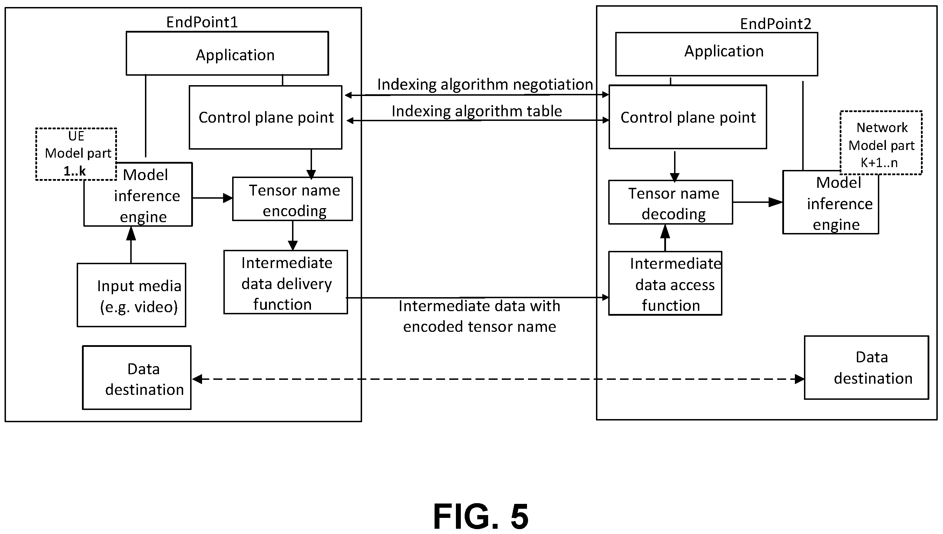

FIG. 5 illustrates a split inference architecture that may be used to implement an indexing method with negation and transmission of intermediate data with encoded tensor name.

*Negotiation and setup*

Example embodiments may be implemented in a context in which endpoints are already exchanging information on the split point, i.e. the layer or node where the inference ends on the first endpoint and where it starts on the second endpoint.

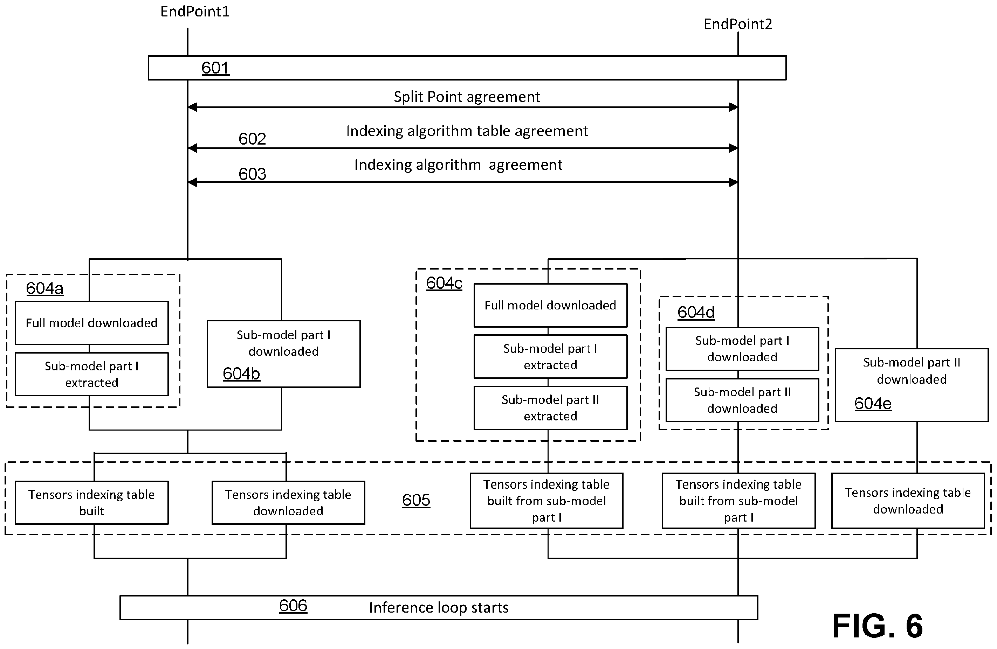

The negotiation phase may be implemented to determine which indexing algorithm will be used to encode the tensor name of each tensor of the intermediate data. In addition to current information, like split point index, in example embodiments, information identifying the indexing algorithm will be exchanged between both endpoints. FIG. 6 illustrates a negotiation method performed in some embodiments. At 601, a negotiation phase has started and both parties, EndPoint1 and EndPoint2 have agreed on a SplitPoint. At 602, EndPoint1 and EndPoint2 agree on an indexing algorithm table (see Table 1: indexing algorithm table). At 603, EndPoint1 and EndPoint2 agree on an indexing algorithm. Endpoint I and endpoint II obtain submodels with different possible ways. At 604a, EndPoint1 downloads the full model and extracts the submodel I; alternatively, at 604b, EndPoint1 downloads the submodel !. At 604c, EndPoint2 downloads the full model and extracts the submodel I and submodel II. Alternatively, at 604d, EndPoint2 downloads the submodel I and submodel !!. Alternatively, at 604e, EndPoint2 downloads the submodel II. At 605, each endpoint either builds the tensors indexing table from the submodel !, or downloads it. At this point, each endpoint has obtained its submodel (submodel I for endpoint I, submodel II for endpoint II) , the tensors indexing table, and has information indicating which indexing algorithm will be used. At 606, the inference loop may start.

In some embodiments, key indexation may be used by exchanging a reference indicating the indexing algorithm used. This reference may be one of the possible references of an indexing algorithm table like that of Table 1.

**Table 1: indexing algorithm table**

| Indexing algorithm reference identifier | Type of reference | Description |
|---|---|---|
| 0 | None | No indexation - Tensor name is unchanged |
| 1 | Global | an integer from 0 to n, indicating the rank of the tensor in the model by order of appearance in the model |

(continued)

| Indexing algorithm reference identifier | Type of reference | Description |
|---|---|---|
| 2 | Global | an integer from 0 to n, indicating the rank of the tensor in the tensors indexing list |
| 3 | Global | an integer from 0 to n, indicating the rank of the tensor in the model by alphabetical order of all tensors name |
| 4 | Global | an integer from 0 to n, indicating the rank of the tensor by an order decided out-of band |
| 5 | Global | a string using a specific format including an integer from 0 to n: e.g. "output 34", "tensor_37" |
| | | |
| 10 | Relative | an array of integers: [node rank, node output rank of this node] e.g. [17,0], [17,1] <br> [17, 0] means the first output of node 17, <br> [17, 1] means the second output of node 17 |
| 11 | Relative | a couple of integers: (node rank, node output rank of this node) e q. (17,0), (17,1) |
| 12 | Relative | a string composed of two integers: node rank.node_output_rank of_this node e.g. "0.0", "0.1" |
| 13 | Relative | a string using a specific format including two integers: <prefix>"_"<node rank>"."<output_rank of_this node> e.g. "output_0.0", "tensor_0.1" |

In some embodiments, information such as that reflected in Table 1 may be available to both endpoints via an out of band solution or exchanged between the endpoints during the negotiation.

### Inference loop

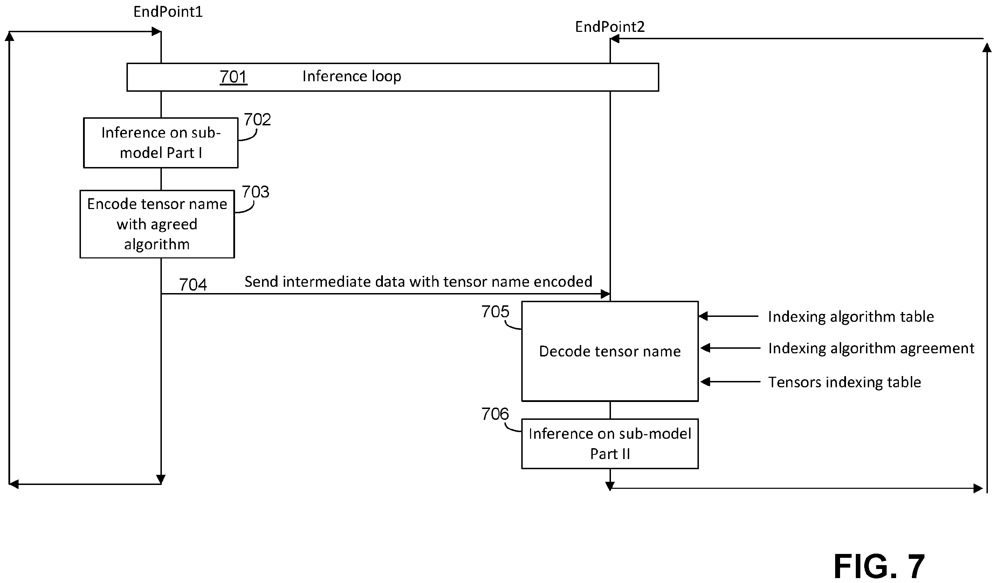

FIG. 7 illustrates the inference loop, the phase during which the inference process runs and intermediate data are sent from EndPoint1 to EndPoint2, as implemented in some embodiments. At 701, the inference loop is running. At 702, on EndPoint1, the inference process is applied on sub-model Part I and generates intermediate data. At 703, on EndPoint1, the encoding process is applied on the tensor name of intermediate data using the agreed index algorithm in the negotiation phase. At 704, intermediate data with the tensor name encoded are sent from EndPoint1 to EndPoint 2. At 705, on EndPoint2, the decoding process is applied on the tensor name of intermediate data using the agreed indexing algorithm table, the agreed index algorithm, and the tensors indexing table obtained during the negotiation phase. At 706, on EndPoint2, the inference process is applied on sub-model Part II.

### Illustration with an existing model

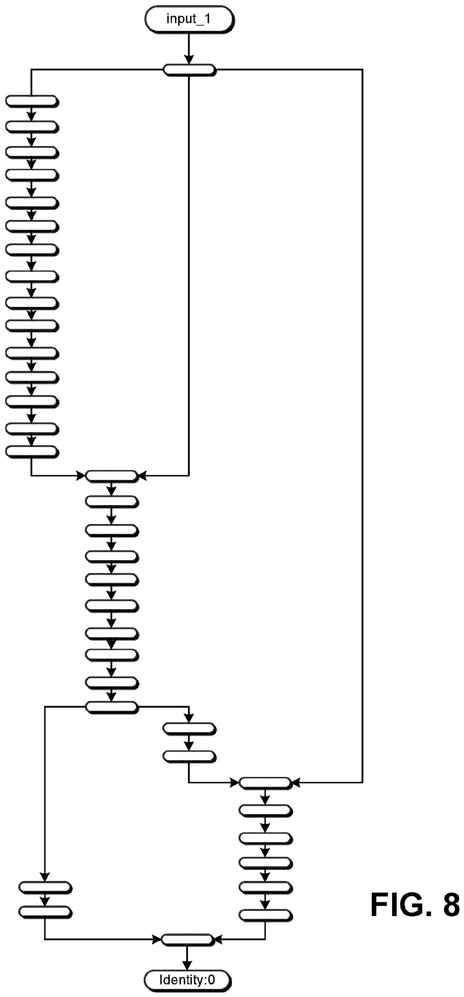

An example embodiment is illustrated here with respect to an existing Nerf (neural radiance field) model. FIG. 8 provides an overview of the topology of the model (for clarity of illustration, most nodes are not labelled).
The following table provides a list of the indices and names of all nodes in the model.

| Node index | Node name |
|---|---|
| 0 | StatefulPartitionedCall/StatefulPartitionedCall/ <br> tf_op_layer_split/PartitionedCall/split |
| 1 | StatefulPartitionedCall/StatefulPartitionedCall/ <br> dense/Stateful PartitionedCall/MatMul |
| 2 | StatefulPartitionedCall/StatefulPartitionedCall/ <br> dense/StatefulPartitionedCall/BiasAdd |

(continued)

| Node index | Node name |
|---|---|
| 3 | StatefulPartitionedCall/StatefulPartitionedCall/dense/StatefulPartitionedCall/re_lu/Relu |
| 4 | StatefulPartitionedCall/StatefulPartitionedCall/dense_1/StatefulPartitionedCall/MatMul |
| 5 | StatefulPartitionedCall/StatefulPartitionedCall/dense_1/StatefulPartitionedCall/BiasAdd |
| 6 | StatefulPartitionedCall/StatefulPartitionedCall/dense_1/StatefulPartitionedCall/re_lu/Relu |
| 7 | StatefulPartitionedCall/StatefulPartitionedCall/dense_2/StatefulPartitionedCall/MatMul |
| 8 | StatefulPartitionedCall/StatefulPartitionedCall/dense_2/StatefulPartitionedCall/BiasAdd |
| 9 | StatefulPartitionedCall/StatefulPartitionedCall/dense_2/StatefulPartitionedCall/re_lu/Relu |
| 10 | StatefulPartitionedCall/StatefulPartitionedCall/dense_3/StatefulPartitionedCall/MatMul |
| 11 | StatefulPartitionedCall/StatefulPartitionedCall/dense_3/StatefulPartitionedCall/BiasAdd |
| 12 | StatefulPartitionedCall/StatefulPartitionedCall/dense_3/StatefulPartitionedCall/re_lu/Relu |
| 13 | StatefulPartitionedCall/StatefulPartitionedCall/dense_4/StatefulPartitionedCall/MatMul |
| 14 | StatefulPartitionedCall/StatefulPartitionedCall/dense_4/StatefulPartitionedCall/BiasAdd |
| 15 | StatefulPartitionedCall/StatefulPartitionedCall/dense_4/StatefulPartitionedCall/re_lu/Relu |
| 16 | StatefulPartitionedCall/StatefulPartitionedCall/tf_op_layer_concat/PartitionedCall/concat |
| 17 | StatefulPartitionedCall/StatefulPartitionedCall/dense_5/StatefulPartitionedCall/MatMul |
| 18 | StatefulPartitionedCall/StatefulPartitionedCall/dense_5/StatefulPartitionedCall/BiasAdd |
| 19 | StatefulPartitionedCall/StatefulPartitionedCall/dense_5/StatefulPartitionedCall/re_lu/Relu |
| 20 | StatefulPartitionedCall/StatefulPartitionedCall/dense_6/StatefulPartitionedCall/MatMul |
| 21 | StatefulPartitionedCall/StatefulPartitionedCall/dense_6/StatefulPartitionedCall/BiasAdd |
| 22 | StatefulPartitionedCall/StatefulPartitionedCall/dense_6/StatefulPartitionedCall/re_lu/Relu |
| 23 | StatefulPartitionedCall/StatefulPartitionedCall/dense_7/StatefulPartitionedCall/MatMul |
| 24 | StatefulPartitionedCall/StatefulPartitionedCall/dense_7/StatefulPartitionedCall/BiasAdd |

(continued)

| Node index | Node name |
|---|---|
| 25 | StatefulPartitionedCall/StatefulPartitionedCall/ dense_7/StatefulPartitionedCall/re_lu/Relu |
| 26 | StatefulPartitionedCall/StatefulPartitionedCall/ dense_8/StatefulPartitionedCall/MatMul |
| 27 | StatefulPartitionedCall/StatefulPartitionedCall/ dense_9/StatefulPartitionedCall/MatMul |
| 28 | StatefulPartitionedCall/StatefulPartitionedCall/ dense_8/StatefulPartitionedCall/BiasAdd |
| 29 | StatefulPartitionedCall/StatefulPartitionedCall/ dense_9/StatefulPartitionedCall/BiasAdd |
| 30 | StatefulPartitionedCall/StatefulPartitionedCall/ tf_op_layer_concat_1/PartitionedCall/concat_1 |
| 31 | StatefulPartitionedCall/StatefulPartitionedCall/ dense_10/StatefulPartitionedCall/MatMul |
| 32 | StatefulPartitionedCall/StatefulPartitionedCall/ dense_10/StatefulPartitionedCall/BiasAdd |
| 33 | StatefulPartitionedCall/StatefulPartitionedCall/ dense_10/StatefulPartitionedCall/re_lu/Relu |
| 34 | StatefulPartitionedCall/StatefulPartitionedCall/ dense_11/StatefulPartitionedCall/MatMul |
| 35 | StatefulPartitionedCall/StatefulPartitionedCall/ dense_11/StatefulPartitionedCall/BiasAdd |
| 36 | StatefulPartitionedCall/StatefulPartitionedCall/ tf_op_layer_concat_2/PartitionedCall/concat_2 |

The following table provides a list of all node outputs of the model, with a global index and a related index.

| Node Index | Output indexes | | Output name |
|---|---|---|---|
| | Global | Related | |
| 0 | **0** | **0.0** | **StatefulPartitionedCall/StatefulPartitionedCall/ tf_op_layer_split/PartitionedCall/split:0** |
| 0 | **1** | **0.1** | **StatefulPartitionedCall/StatefulPartitionedCall/ tf_op_layer_split/PartitionedCall/split:1** |
| 1 | 2 | 1.0 | StatefulPartitionedCall/StatefulPartitionedCall/ dense/StatefulPartitionedCall/MatMul:0 |
| 2 | **3** | **2.0** | **StatefulPartitionedCall/StatefulPartitionedCall/ dense/StatefulPartitionedCall/BiasAdd:0** |
| 3 | 4 | 3.0 | StatefulPartitionedCall/StatefulPartitionedCall/ dense/StatefulPartitionedCall/re_luZRelu:0 |
| 4 | 5 | 4.0 | StatefulPartitionedCall/StatefulPartitionedCall/ dense_1/StatefulPartitionedCall/MatMul:0 |
| 5 | 6 | 5.0 | StatefulPartitionedCall/StatefulPartitionedCall/ dense_1/StatefulPartitionedCall/BiasAdd:0 |

(continued)

| Node Index | Output indexes | | Output name |
|---|---|---|---|
| | Global | Related | |
| 6 | 7 | 6.0 | StatefulPartitionedCall/StatefulPartitionedCall/ dense_1/StatefulPartitionedCall/re_luZRelu:0 |
| 7 | 8 | 7.0 | StatefulPartitionedCall/StatefulPartitionedCall/ dense_2/StatefulPartitionedCall/MatMul:0 |
| 8 | 9 | 8.0 | StatefulPartitionedCall/StatefulPartitionedCall/ dense_2/StatefulPartitionedCall/BiasAdd:0 |
| 9 | 10 | 9.0 | StatefulPartitionedCall/StatefulPartitionedCall/ dense_2/StatefulPartitionedCall/re_lu/Relu:0 |
| 10 | 11 | 10.0 | StatefulPartitionedCall/StatefulPartitionedCall/ dense_3/StatefulPartitionedCall/MatMul:0 |
| 11 | 12 | 11.0 | StatefulPartitionedCall/Stateful PartitionedCall/ dense_3/StatefulPartitionedCall/BiasAdd:0 |
| 12 | 13 | 12.0 | StatefulPartitionedCall/StatefulPartitionedCall/ dense_3/StatefulPartitionedCall/re_lu/Relu:0 |
| 13 | 14 | 13.0 | StatefulPartitionedCall/StatefulPartitionedCall/ dense_4/StatefulPartitionedCall/MatMul:0 |
| 14 | 15 | 14.0 | StatefulPartitionedCall/StatefulPartitionedCall/ dense_4/StatefulPartitionedCall/BiasAdd:0 |
| 15 | 16 | 15.0 | StatefulPartitionedCall/StatefulPartitionedCall/ dense_4/StatefulPartitionedCall/re_luZRelu:0 |
| 16 | 17 | 16.0 | StatefulPartitionedCall/StatefulPartitionedCall/ tf_op_layer_concat/PartitionedCall/concat:0 |
| 17 | 18 | 17.0 | StatefulPartitionedCall/StatefulPartitionedCall/ dense_5/StatefulPartitionedCall/MatMul:0 |
| 18 | 19 | 18.0 | StatefulPartitionedCall/StatefulPartitionedCall/ dense_5/StatefulPartitionedCall/BiasAdd:0 |
| 19 | 20 | 19.0 | StatefulPartitionedCall/StatefulPartitionedCall/ dense_5/StatefulPartitionedCall/re_lu/Relu:0 |
| 20 | 21 | 20.0 | StatefulPartitionedCall/StatefulPartitionedCall/ dense_6/StatefulPartitionedCall/MatMul:0 |
| 21 | 22 | 21.0 | StatefulPartition edCall/StatefulPartitionedCall/ dense_6/StatefulPartitionedCall/BiasAdd:0 |
| 22 | 23 | 22.0 | StatefulPartitionedCall/StatefulPartitionedCall/ dense_6/StatefulPartitionedCall/re_lu/Relu:0 |
| 23 | 24 | 23.0 | StatefulPartitionedCall/StatefulPartitionedCall/ dense_7/StatefulPartitionedCall/MatMul:0 |
| 24 | 25 | 24.0 | StatefulPartitionedCall/StatefulPartitionedCall/ dense_7/StatefulPartitionedCall/BiasAdd:0 |
| 25 | 26 | 25.0 | StatefulPartitionedCall/StatefulPartitionedCall/ dense_7/StatefulPartitionedCall/re_luZRelu:0 |
| 26 | 27 | 26.0 | StatefulPartitionedCall/StatefulPartitionedCall/ dense_8/StatefulPartitionedCall/MatMul:0 |
| 27 | 28 | 27.0 | StatefulPartition edCall/StatefulPartitionedCall/ |

(continued)

| Node Index | Output indexes | | Output name |
|---|---|---|---|
| | Global | Related | |
| | | | dense_9/StatefulPartitionedCall/MatMul:0 |
| 28 | 29 | 28.0 | StatefulPartitionedCall/StatefulPartitionedCall/ dense_8/StatefulPartitionedCall/BiasAdd:0 |
| 29 | 30 | 29.0 | StatefulPartitionedCall/StatefulPartitionedCall/ dense_9/StatefulPartitionedCall/BiasAdd:0 |
| 30 | 31 | 30.0 | StatefulPartitionedCall/StatefulPartitionedCall/ tf_op_layer_concat_1/PartitionedCall/concat_1:0 |
| 31 | 32 | 31.0 | StatefulPartitionedCall/StatefulPartitionedCall/ dense_10/StatefulPartitionedCall/MatMul:0 |
| 32 | 33 | 32.0 | StatefulPartitionedCall/StatefulPartitionedCall/ dense_10/StatefulPartitionedCall/BiasAdd:0 |
| 33 | 34 | 33.0 | StatefulPartitionedCall/StatefulPartitionedCall/ dense_10/StatefulPartitionedCall/re_lu/Relu:0 |
| 34 | 35 | 34.0 | StatefulPartitionedCall/StatefulPartitionedCall/ dense_11/StatefulPartitionedCall/MatMul:0 |
| 35 | 36 | 35.0 | StatefulPartitionedCall/StatefulPartitionedCall/ dense_11/StatefulPartitionedCall/BiasAdd:0 |
| 36 | 37 | 36.0 | Identity:0 |

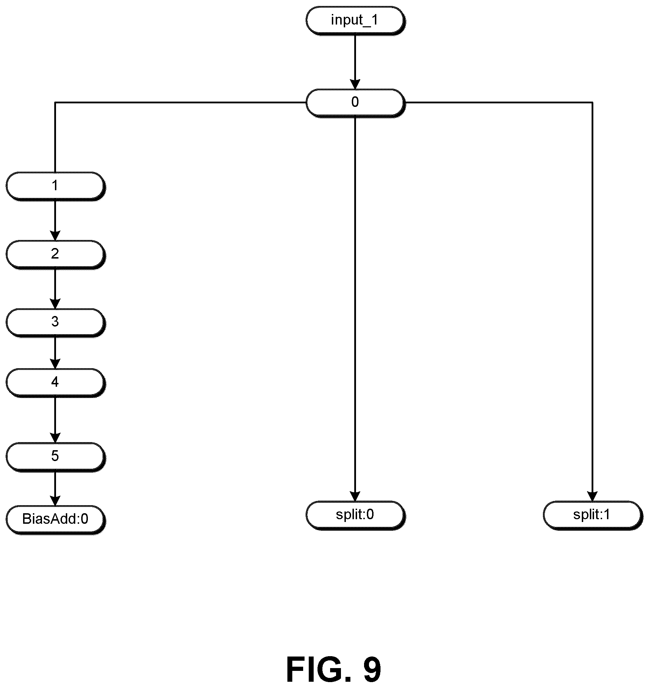

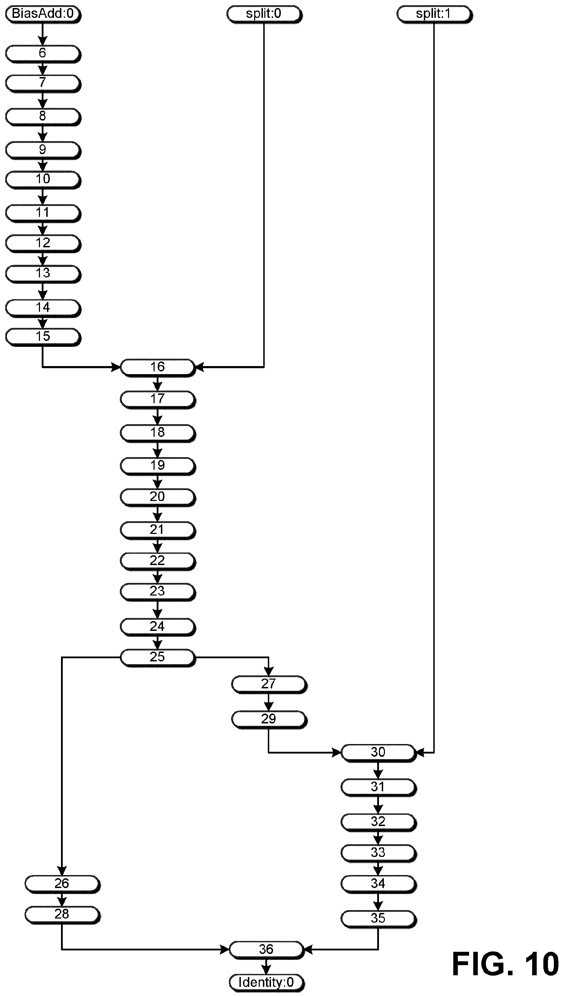

In a case where the model is split at the node with index 5, the resulting Submodel I is as illustrated in FIG. 9. In the illustration of FIG. 9, the nodes are identified by their node indices. Correspondingly, the resulting Submodel II is as illustrated in FIG. 10. In the illustration of FIG. 10, the nodes are identified by their node indices.

In the case as illustrated in FIGs. 9-10, where the model is split after the node with index 5, the intermediate tensors names to communicate from EndPoint1 to EndPoint2 are as follows:

```
[
        'StatefulPartitionedCall/StatefulPartitionedCall/
                dense_1/StatefulPartitionedCall/BiasAdd:0',
        'StatefulPartitionedCall/StatefulPartitionedCall/
                tf_op_layer_split/PartitionedCall/split:0',
        'StatefulPartitionedCall/StatefulPartitionedCall/
                tf_op_layer_split/PartitionedCall/split:1'
                ]
```

In one example embodiment, the tensor names are encoded using a global index, for example as follows:

- "3" for 'StatefulPartitionedCall/StatefulPartitionedCall/dense_1 /StatefulPartitionedCall/BiasAdd:O',
- "0" for 'StatefulPartitionedCall/StatefulPartitionedCall/tf_op _layer_split/PartitionedCall/split:0',
- "1" for StatefulPartitionedCall/StatefulPartitionedCall/tf_op_layer_split/PartitionedCall/split:1'

The compression ratios in this case may be estimated as follows:

- If the global index is coded with a 16 bits integer:
  16 bits for the global index, about 80 * 8=640 bits for the tensor name:
  640/16=40

- If the global index is coded with a string:

  encoded length is 8 bits

640/8=80

In another example embodiment, the tensor names are encoded with the couple index:

- "2.0" or (2,0) for
  'StatefulPartitionedCall/StatefulPartitionedCall/dense_1 /StatefulPartitionedCall/BiasAdd:O',
- "0.0" or (0,0) for
  'StatefulPartitionedCall/StatefulPartitionedCall/tf op_layer split/PartitionedCall/split:0',
- "0.1" or (0,1) for
  StatefulPartitionedCall/StatefulPartitionedCall/tf op_layer split/PartitionedCall/split:1'

The compression ratios in this case may be estimated as follows:

- If index is coded with two 16 bits integer:
  2*16=32 bits for the global index, about 80 * 8=640 bits for the tensor name:
  640/32=20

- If index is coded with a string:

  encoded tensor name is made of a string of three characters (e.g. "0.0") to four characters (e.g. "36.0").
  640/(3*8)=26.67
  640/(4*8)=20

### Implementations using 3GPP

In 3GPP SA4 26.927 v0.90, "Study on Artificial Intelligence (AI) and Machine Learning (ML) for Media," clause 6.6.4 provides a table describing intermediate data information for split AI/ML operations. In an example embodiment implemented in a 3GPP system, the following information may be included in the intermediate data and may be described in the table as follows.

| Tensor name encoding algorithm identifier | The encoding used for the encoding of the tensor name | 1 (for global indexation, cf. Table 1: indexing algorithm table) |
|---|---|---|

The row in the table with Tensor Name may also be amended as follows.

| Tensor name | The name or encoded name of the tensor | Tensor1, 17, output_17 |
|---|---|---|

In an example embodiment, the table describing intermediate data information may identify the structure of intermediate data output from a first endpoint to be retrieved to feed the inference of the second endpoint after transmission of the intermediate data over the network. An example of an updated table is as follows.
In some embodiments, the tensor identification can have any of a variety of different formats. For example, a tensor identifier can be a name, a numerical index that can be extracted from a list or a tensor index table
A tensor encoding type may be used to identify from which method the tensor is identified, either by an index of table or of a list, by a name.
A tensor identifier type may be negotiated and exchanged between split endpoints during the configuration stage.

| Metadata category | Metadata type | Definition | Metadata type description (Examples) |
|---|---|---|---|
| Intermediate data general information | Tensor structure framework | The exact underlying tensor structure of the intermediate data tensors including the exact version of it. | PyTorch 2.0, TensorFlow v2.13.0, NumPy v1 .25 |
| | Data direction | This defines the direction of transmitted data, either uplink (from UE endpoint to network endpoint) or downlink (From a network endpoint to the UE endpoint). This information may be useful to configure an intermediate data delivery session | Upstream, Downstream |
| | Global compression algorithm | Identifies a compression algorithm that can be applied to all the intermediate data tensors. For example, when the connectivity condition between the UE and the network is insufficient to transmit the original intermediate data, a compression algorithm may be applied. | NONE, FCM, SNAPPY, ... |
| | Tensor identifier type | The type of the tensor identifier | Name, Index |
| | Tensor name encoding algorithm identifier | The encoding algorithm used for the encoding of the tensor name. | 1 (for global indexation, cf table Table 1: indexing algorithm table) |

| Intermediate data tensor information | Tensor list | | List of Tensors that composed the intermediate data | [tensor1, tensor2, tensor3, tensor4] |
|---|---|---|---|---|
| | | Tensor identifier | A unique identifier for the tensor. The identifier may be a name, an index of a tensor list or table, a combination thereof. The type of the identifier is defined by the tensor identifier type. | Tensor1 Index=10 |
| | | Tensor shape | Tensor shape is a tuple of positive integers, where the size of the tuple represents the dimension of the tensor, and each value represents the size in each dimension. | [1,64,64,64]. |
| | | Tensor data type | The data type of each intermediate data tensor | Float32, int32 |
| | | Tensor compression algorithm | Identifies the compression algorithm(s) that can be applied to a particular tensor. The tensor compression algorithm supersedes the global compression algorithm when both are defined | NONE, FCM, SNAPPY, ... |

## Call flow

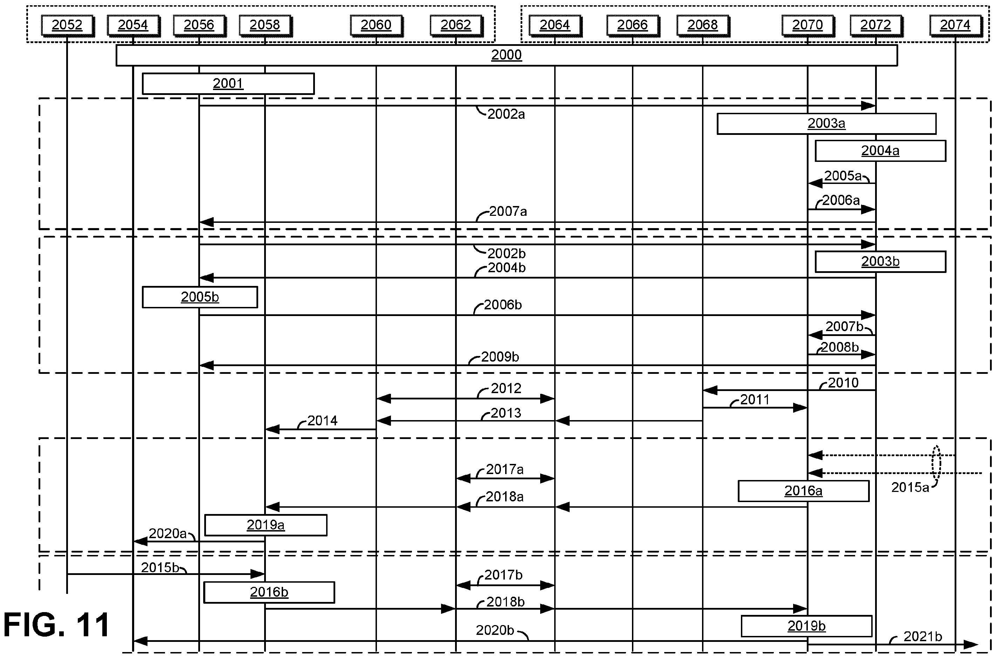

In 3GPP SA4 26.927 v0.90, Clause 5.2.3.2 describes basic workflows for split inferencing. An overview of the workflow is provided in the call flow diagram of FIG. 11. Some embodiments may be implemented using a 3GPP split inferencing call flow such as that illustrated in FIG. 11.

In FIG. 11, a UE has some or all of the following components: a UE data source 2052, a UE data destination 2054, a UE application 2056, an AI model inference engine 2058, an AI model access function 2060, and an intermediate data access function 2062. A network includes some or all of the following components: an intermediate data delivery function 2064, an AI model delivery function 2066, an AI model repository 2068, an AI model inference engine 2070, a network application 2072, and a data source 2074.

At 2000, session establishment is performed. In an AI split inference negotiation, at 2001, a UE's endpoint capability information is obtained.

In a case where the network decides on the AI model split, the split inference negotiation proceeds with steps 2002a-2007a. At 2002a, a split inference request is made. At 2003a, the network gets the UE's request information. At 2004a, the network selects the split AI model. At 2005a, the network application requests allocation of resources for AI inference, and at 2006a it receives a response. At 2007a, the AI split inference response is sent to the UE.

In a case where the network decides on the AI model split, the split inference negotiation proceeds with steps 2002b-2009b. At 2002b, the UE makes an AI model information request. At 2003b, an AI model is selected, and at 2004b, an AI model information response is provided to the UE. At 2005b, the UE selects a split AI model and at 2006b sends an AI split inference selection request to the network. At 2007b a request is made to allocate AI inference resources, and a response is received at 2008b. At 2009b, an AI split inference selection response is sent to the UE.

AI model subset delivery is performed in steps 2010-2014. At 2010, selected AI model subsets are identified. At 2011, the appropriate AI/ML subset is passed to the network for inferencing. At 2012, a UE AI model subset delivery session is established. At 2013, the appropriate AI/ML subset is delivered to the UE. At 2014, the UE's AI/ML model subset is passed to the UE's AI model inference engine for inferencing.

In a case where the data source for the AI inferencing is on the network, the AI split inferencing proceeds with steps 2015a through 2020a. At 2015a, the input media data is retrieved from the network or from a peer user. At 2016a, AI inferencing is performed on the first sub-model, and at 2018a, the resulting intermediate data is provided to the UE. At 2019a, the UE runs the second sub-model on the intermediate data, and at 2020a, it provides the inference output to the appropriate UE data destination.

In a case where the data source for the AI inferencing is in the UE, the AI split inferencing proceeds with steps 2015b through 2021b. At 2015b, the input media data is provided to the AI model inference engine of the UE. At 2016b, the UE runs the first sub-model on the input media data to obtain intermediate data. At 2017b, an intermediate data delivery session is established, and at 2018b, the intermediate data is delivered to the AI model inference engine on the network. At 2019b, the second sub-model is run on the intermediate data to obtain the final output of the model. The output is then delivered to the UE (at 2020b) or to another recipient (at 2021b).

Within this workflow, at 2006b, the UE application sends an AI split inference selection request to the network application with the selected split point configuration. In an example embodiment, this flow 2006b may be extended to carry information on the tensor name encoding, as tensor name encoding may be part of the split point configuration.

*Compression metadata*

In 3GPP SA4 26.927 v0.90, Clause 6.6.7 describes compression metadata. In some embodiments, the following information may be added in the existing table describing compression metadata.

| Tensor name encoding algorithm identifier | The encoding used for the encoding of the tensor name | 1 (for global indexation, cf table Table 1: indexing algorithm table) |
|---|---|---|

In some embodiments, the row with Tensor Name may also be amended as follows.

| Tensor name | The name or encoded name of the tensor | Tensor1, 17, output_17 |
|---|---|---|

As a result, example embodiments implemented in a 3GPP system may use metadata as described in the following updated table.

| Metadata category | Metadata type | Definition | Metadata type description (Examples) |
|---|---|---|---|
| **Split point information** | **Split point identifier** | Key identifier of the split point clause §6.6.3 to associate value data below | Nb:10, 75 Name: Layer_10, |

(continued)

| Metadata category | Metadata type | Definition | Metadata type description (Examples) | |
|---|---|---|---|---|
| split point compression characteristics | Compressed intermediate data size | The compressed intermediate data size. If no compression, the size is the baseline data size. | 12 Mbytes | |
| | Compressed intermediate data size ratio | The ratio gives an indication on how much the data has been reduced after apply compression. Example of representation of ratios:<br><br>$$compression\ ratio\ a) = \frac{uncompressed\ intermediate\ size}{compressed\ intermediate\ size}$$<br><br>$$compression\ ratio\ b) = \frac{uncompressed\ intermediate\ size - compressed\ intermediate\ size}{uncompressed\ intermediate\ size}$$<br>$$where\ compression\ ratio\ percentage = compression\ ratio\ b) * 100$$ | ratio a) 5:1 or 5/1 means the size has been reduced from a factor 5<br><br>ratio b) 0,8 means a reduction of 80% of the baseline size | |
| | Compression performance metric value | The measured performance metric value depending on the performance metrics used, e.g. Map score, F1 score, accuracy | F1 Score, Map score | |
| | **Compression performance metric ratio** | | The ratio is calculated from the metric value obtained using compression divided by the value obtained without compression. for example, it may indicate how much accuracy has been affected | Ratio 0.9 or 90% means a reduction performance accuracy of 10% |
| | **Tensor name encoding algorithm identifier** | | **The encoding used for the encoding of the tensor name** | **1 (for global indexation, cf Table 1: indexing algorithm table)** |
| intermediate data tensors associated to compression profile | **Tensor list** | | List of tensors or groups of tensors that composed intermediate data | e.g. list of ONNX tensor names Tensor1, Tensor2 |

(continued)

| Metadata category | Metadata type | Definition | Metadata type description (Examples) | |
|---|---|---|---|---|
| | | **Tensor group compression name** | This identifies a group of tensors when each group is associated with a common compression profile. | Group 1, Group 2 |
| | | **Tensor group compression type** | This identifies the type for all tensors belonging to tensor group. | Float32 |
| | | **Tensor compression granularity** | This indicates if the compression profiles are applied to each tensor one by one (keyword is "tensor"), or to all the tensors of this group (keyword is "global"). | "tensor", "global" |
| | | **Tensor name** | The name or encoded name of the tensor | Tensor1, 17, output_17 |
| | | **Tensor shape** | Tensor shape output. The output tensor shape may be different from input and uncompressed tensor shape or may be transposed | [1,64,64,64]. |
| | | **Tensor data type** | The type of the tensor | Int32, Float32, |
| | | **Tensor compression algorithm profile identifier** | Identifies the selected compression algorithm profile | FCM high 5.1, FCM main 5.3, FCM 6.4 NNC xxx 5.7.9, NNC yyy 5.8, NNC vvv 6.4 |

Example embodiments enable two endpoints to transmit efficiently intermediate data tensor names with bandwidth gain and confidentiality.

*Example systems*

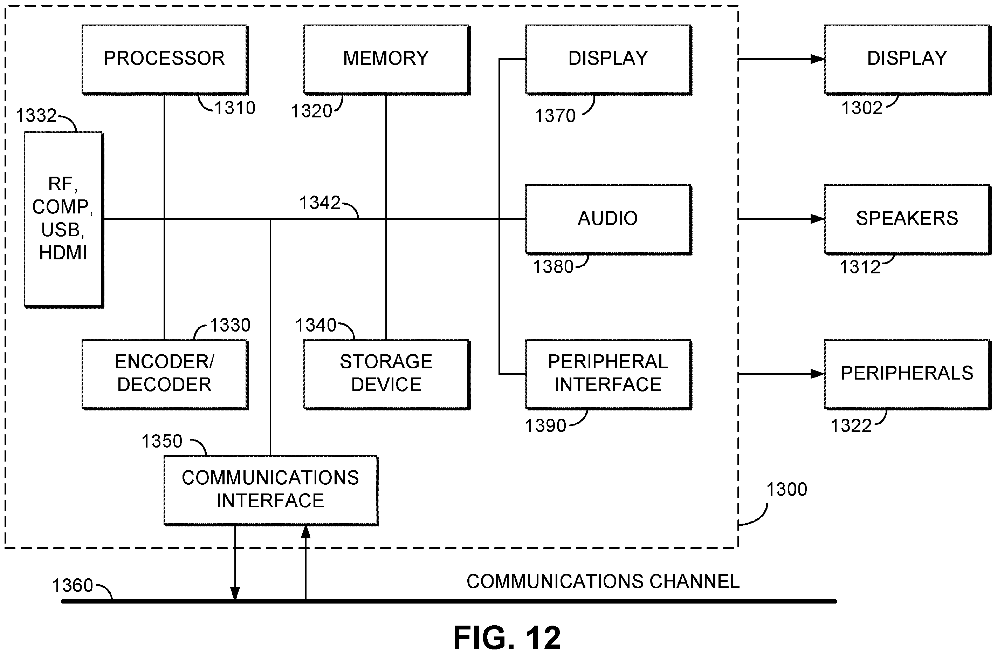

Some embodiments may be implemented on a system of one or more processors as illustrated in FIG. 12. FIG. 12 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further embodiments

A method according to some embodiments comprises: at a first endpoint, obtaining information describing at least a first sub-model of a split-inferencing machine learning model; in communication with a second endpoint, selecting a tensor indexing algorithm; executing the first sub-model to obtain at least one tensor; and sending the tensor to the second endpoint, wherein each tensor is identified by a respective reference determined according to the selected tensor indexing algorithm.

An apparatus according to some embodiments comprises one or more processors configured to perform at least: at a first endpoint, obtaining information describing at least a first sub-model of a split-inferencing machine learning model; in communication with a second endpoint, selecting a tensor indexing algorithm; executing the first sub-model to obtain at least one tensor; and sending the tensor to the second endpoint, wherein each tensor is identified by a respective reference determined according to the selected tensor indexing algorithm.

In some embodiments, the selected tensor indexing algorithm assigns an integer to each tensor.

In some embodiments, the selected tensor indexing algorithm performs a loop through each tensor output by each node of the first sub-model and sequentially assigns an integer to each of the tensors.

In some embodiments, the selected tensor indexing algorithm assigns a string including at least one integer to each tensor.

In some embodiments, the selected tensor indexing algorithm assigns to each tensor a reference that includes an array or a pair of integers.

In some embodiments, a first integer in the array or pair identifies a node in the first sub-model of which the respective tensor is an output, and a second integer in the array or pair identifies the respective tensor from among all outputs of the same node.

In some embodiments, selecting the tensor indexing algorithm comprises sending to the second endpoint, or receiving from the second endpoint, a tensor name encoding algorithm identifier.

A method according to some embodiments comprises: at a second endpoint, obtaining information describing at least a second sub-model of a split-inferencing machine learning model; in communication with a first endpoint, selecting a tensor indexing algorithm; receiving at least one tensor from the first endpoint, wherein each tensor is identified by a respective reference determined according to the selected tensor indexing algorithm; and executing the second sub-model on the at least one tensor.

An apparatus according to some embodiments comprises one or more processors configured to perform at least: at a second endpoint, obtaining information describing at least a second sub-model of a split-inferencing machine learning model; in communication with a first endpoint, selecting a tensor indexing algorithm; receiving at least one tensor from the first endpoint, wherein each tensor is identified by a respective reference determined according to the selected tensor indexing algorithm; and executing the second sub-model on the at least one tensor.

Some embodiments further comprise obtaining information describing a first sub-model of the split-inferencing machine learning model, wherein the reference of the at least one tensor is determined based at least in part on the information describing the first sub-model.

In some embodiments, the selected tensor indexing algorithm performs a loop through each tensor output by each node of the first sub-model and sequentially assigns an integer to each of the tensors.

In some embodiments, the selected tensor indexing algorithm assigns to each tensor a reference that includes an array or a pair of integers, and wherein a first integer in the array or pair identifies a node in the first sub-model of which the respective tensor is an output, and a second integer in the array or pair identifies the respective tensor from among all tensors that are outputs of the same node.

In some embodiments, the selected tensor indexing algorithm assigns an integer to each tensor.

In some embodiments, selecting the tensor indexing algorithm comprises sending to the first endpoint, or receiving from the second endpoint, a tensor name encoding algorithm identifier.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method comprising:

   at a first endpoint, obtaining information describing at least a first sub-model of a split-inferencing machine learning model;
   in communication with a second endpoint, selecting a tensor indexing algorithm;
   executing the first sub-model to obtain at least one tensor; and
   sending the tensor to the second endpoint, wherein each tensor is identified by a respective reference determined according to the selected tensor indexing algorithm.

2. An apparatus comprising one or more processors configured to perform at least:

   at a first endpoint, obtaining information describing at least a first sub-model of a split-inferencing machine learning model;
   in communication with a second endpoint, selecting a tensor indexing algorithm;
   executing the first sub-model to obtain at least one tensor; and
   sending the tensor to the second endpoint, wherein each tensor is identified by a respective reference determined according to the selected tensor indexing algorithm.

3. The method of claim 1, or the apparatus of claim 2, wherein the selected tensor indexing algorithm assigns an integer to each tensor.

4. The method of claim 1, or the apparatus of claim 2, wherein the selected tensor indexing algorithm performs a loop through each tensor output by each node of the first sub-model and sequentially assigns an integer to each of the tensors.

5. The method of claim 1, or the apparatus of claim 2, wherein the selected tensor indexing algorithm assigns a string including at least one integer to each tensor.

6. The method of claim 1, or the apparatus of claim 2, wherein the selected tensor indexing algorithm assigns to each tensor a reference that includes an array or a pair of integers.

7. The method of claim 6 as it depends from claim 1, or the apparatus of claim 6 as it depends from claim 2, wherein a first integer in the array or pair identifies a node in the first sub-model of which the respective tensor is an output, and a second integer in the array or pair identifies the respective tensor from among all outputs of the same node.

8. The method of claim 1, or claims 3-7 as they depend from claim 1, or the apparatus of claim 2, or claims 3-7 as they depend from claim 2, wherein selecting the tensor indexing algorithm comprises sending to the second endpoint, or receiving from the second endpoint, a tensor name encoding algorithm identifier.

9. A method comprising:

at a second endpoint, obtaining information describing at least a second sub-model of a split-inferencing machine learning model;
in communication with a first endpoint, selecting a tensor indexing algorithm;
receiving at least one tensor from the first endpoint, wherein each tensor is identified by a respective reference determined according to the selected tensor indexing algorithm; and
executing the second sub-model on the at least one tensor.

10. An apparatus comprising one or more processors configured to perform at least:

at a second endpoint, obtaining information describing at least a second sub-model of a split-inferencing machine learning model;
in communication with a first endpoint, selecting a tensor indexing algorithm;
receiving at least one tensor from the first endpoint, wherein each tensor is identified by a respective reference determined according to the selected tensor indexing algorithm; and
executing the second sub-model on the at least one tensor.

11. The method of claim 9, or the apparatus of claim 10, further comprising obtaining information describing a first sub-model of the split-inferencing machine learning model, wherein the reference of the at least one tensor is determined based at least in part on the information describing the first sub-model.

12. The method of claim 11 as it depends from claim 9, or the apparatus of claim 11 as it depends from claim 10, wherein the selected tensor indexing algorithm performs a loop through each tensor output by each node of the first sub-model and sequentially assigns an integer to each of the tensors.

13. The method of claim 11 as it depends from claim 9, or the apparatus of claim 11 as it depends from claim 10, wherein the selected tensor indexing algorithm assigns to each tensor a reference that includes an array or a pair of integers, and wherein a first integer in the array or pair identifies a node in the first sub-model of which the respective tensor is an output, and a second integer in the array or pair identifies the respective tensor from among all tensors that are outputs of the same node.

14. The method of claim 9, or the apparatus of claim 10, wherein the selected tensor indexing algorithm assigns an integer to each tensor.

15. The method of claim 9, or claims 11-14 as they depend from claim 9, or the apparatus of claim 10, or claims 11-14 as they depend from claim 10, wherein selecting the tensor indexing algorithm comprises sending to the first endpoint, or receiving from the second endpoint, a tensor name encoding algorithm identifier.

**FIG. 1**

**UE (AI enabled device)**

- UE Application
- UE Model part **K+1:n**
- Model inference engine
- Post-processing
- Media consumption
- Intermediate data access function

**Network Application**

- Network Model part **1..k**
- Model inference engine
- Pre-processing
- Input media (e.g. video)
- Intermediate data delivery function

Intermediate data

**FIG. 2**

FIG. 3A

FIG. 3B

## FIG. 3C

```
                              ┌─────────┐
                              │  input  │
                              └─────────┘
                                   │
                                 input
                                   │
                                   ▼
        /feature_extractor/feature_extractor/feature_extractor.0/Conv

                     /feature_extractor/feature_extractor/feature_extractor.0/Conv_output_0
                                   │
                                   ▼
        /feature_extractor/feature_extractor/feature_extractor.2/Relu

                     /feature_extractor/feature_extractor/feature_extractor.2/Relu_output_0
                                   │
                                   ▼
        /feature_extractor/feature_extractor/feature_extractor.3/MaxPool

        /feature_extractor/feature_extractor/feature_extractor.3/MaxPool_output_0
                                   │
                                   ▼                                     MaxPool_output_0
  /feature_extractor/feature_extractor/feature_extractor.4/feature_extractor.4.0/conv1/Conv

          /feature_extractor/feature_extractor/feature_extractor.4/feature_extractor.4.0/conv1/Conv_output_0
                                   │
                                   ▼
  /feature_extractor/feature_extractor/feature_extractor.4/feature_extractor.4.0/relu/Relu

          /feature_extractor/feature_extractor/feature_extractor.4/feature_extractor.4.0/relu/Relu_output_0
                                   │
                                   ▼
  /feature_extractor/feature_extractor/feature_extractor.4/feature_extractor.4.0/conv2/Conv

          /feature_extractor/feature_extractor/feature_extractor.4/feature_extractor.4.0/conv2/Conv_output_0
                                   │
                                   ▼
                            Conv_output_0
```

# FIG. 4A

Conv_output_0

MaxPool_output_0

/feature_extractor/feature_extractor/feature_extractor.4/conv2/Conv_output_0

/feature_extractor/feature_extractor/feature_extractor.3/MaxPool_output_0

/feature_extractor/feature_extractor/feature_extractor.4/relu_1/Relu

/feature_extractor/feature_extractor/feature_extractor.4/feature_extractor.4.0/relu_1/Relu_output_0

/feature_extractor/feature_extractor/feature_extractor.4/feature_extractor.4.0/conv3/Conv

/feature_extractor/feature_extractor/feature_extractor.4/feature_extractor.4.0/conv3/Conv_output_0

/feature_extractor/feature_extractor/feature_extractor.4/feature_extractor.4.0/downsample/downsample.0/Conv

/feature_extractor/feature_extractor/feature_extractor.4/feature_extractor.4.0/downsample/downsample.0/Conv_output_0

/feature_extractor/feature_extractor/feature_extractor.4/feature_extractor.4.0/Add

/feature_extractor/feature_extractor/feature_extractor.4/feature_extractor.4.0/Add_output_0

## FIG. 4B

EP 4 742 103 A1

/feature_extractor/feature_extractor/feature_extractor.4/feature_extractor.4.0/Add_output_0

/feature_extractor/feature_extractor/feature_extractor.4/feature_extractor.4.0/relu_2/Relu

/feature_extractor/feature_extractor/feature_extractor.4/feature_extractor.4.0/relu_2/Relu_output_0

/feature_extractor/feature_extractor/feature_extractor.4/feature_extractor.4.1/conv1/Conv

/feature_extractor/feature_extractor/feature_extractor.4/feature_extractor.4.1/conv1/Conv_output_0

/feature_extractor/feature_extractor/feature_extractor.4/feature_extractor.4.1/relu/Relu

/feature_extractor/feature_extractor/feature_extractor.4/feature_extractor.4.1/relu/Relu_output_0

/feature_extractor/feature_extractor/feature_extractor.4/feature_extractor.4.1/conv2/Conv

/feature_extractor/feature_extractor/feature_extractor.4/feature_extractor.4.1/conv2/Conv_output_0

/feature_extractor/feature_extractor/feature_extractor.4/feature_extractor.4.1/relu_1/Relu

/feature_extractor/feature_extractor/feature_extractor.4/feature_extractor.4.1/relu_1/Relu_output_0

/feature_extractor/feature_extractor/feature_extractor.4/feature_extractor.4.1/conv3/Conv

/feature_extractor/feature_extractor/feature_extractor.4/feature_extractor.4.1/conv3/Conv_output_0

/feature_extractor/feature_extractor/feature_extractor.4/feature_extractor.4.1/Add

/feature_extractor/feature_extractor/feature_extractor.4/feature_extractor.4.1/Add_output_0

/feature_extractor/feature_extractor/feature_extractor.4/feature_extractor.4.0/relu_2/Relu_output_0

**FIG. 4C**

FIG. 4D

**FIG. 5**

EP 4 742 103 A1

**FIG. 6**

EndPoint1

EndPoint2

601

Split Point agreement

602    Indexing algorithm table agreement

603    Indexing algorithm agreement

604a
Full model downloaded
Sub-model part I extracted

Sub-model part I downloaded
604b

604c
Full model downloaded
Sub-model part I extracted
Sub-model part II extracted

604d
Sub-model part I downloaded
Sub-model part II downloaded

Sub-model part II downloaded
604e

Tensors indexing table built

Tensors indexing table downloaded

605

Tensors indexing table built from sub-model part I

Tensors indexing table built from sub-model part I

Tensors indexing table downloaded

606    Inference loop starts

EP 4 742 103 A1

**FIG. 7**

input_1

FIG. 8

Identity:0

FIG. 9

FIG. 10

FIG. 11

FIG. 12

DISPLAY 1302
SPEAKERS 1312
PERIPHERALS 1322

1300

DISPLAY 1370
AUDIO 1380
PERIPHERAL INTERFACE 1390

MEMORY 1320
1342
STORAGE DEVICE 1340

PROCESSOR 1310
RF, COMP, USB, HDMI 1332
ENCODER/ DECODER 1330

COMMUNICATIONS INTERFACE 1350

COMMUNICATIONS CHANNEL 1360

<table>
<tr><td>Europäisches Patentamt<br>European Patent Office<br>Office européen des brevets</td><td align="center">**EUROPEAN SEARCH REPORT**</td><td>**Application Number**<br><br>**EP 24 30 6886**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAKRABORTY PRASENJIT ET AL: "M-STREAM: A split model Streaming and Inferencing method for reduced end-to-end Execution Latency",<br>2023 IEEE INTERNATIONAL CONFERENCE ON ELECTRONICS, COMPUTING AND COMMUNICATION TECHNOLOGIES (CONECCT), IEEE,<br>14 July 2023 (2023-07-14), pages 1-6,<br>XP034417532,<br>DOI: 10.1109/CONECCT57959.2023.10234760<br>[retrieved on 2023-09-05]<br>* the whole document * | 1-15 | INV.<br>G06N3/063<br>G06N3/10<br><br>ADD.<br>G06N3/045 |
| X | "Adaptive Methods for Tensor Data Compression",<br>2024 16TH INTERNATIONAL CONFERENCE ON COMMUNICATION SYSTEMS & NETWORKS (COMSNETS), IEEE,<br>3 January 2024 (2024-01-03), pages 515-523, XP034548002,<br>DOI: 10.1109/COMSNETS59351.2024.10427426<br>[retrieved on 2024-02-16]<br>* abstract *<br>* sectiosn I, III.A *<br>* figures 1-4 * | 1-15 | TECHNICAL FIELDS SEARCHED (IPC)<br><br>G06N |

The present search report has been drawn up for all claims

| Place of search | Date of completion of the search | Examiner |
|---|---|---|
| The Hague | 9 April 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                         

& : member of the same patent family, corresponding document

EPO FORM 1503 03.82 (P4C01)